# FASCICULE DE BREVET EUROPEEN

(11) **EP 0 606 808 B1**
(45) Date de publication et mention de la délivrance du brevet: **31.07.1996**
(21) Numéro de dépôt: 93420482.7
(22) Date de dépôt: 06.12.1993
(51) Int. Cl.: F16B 45/02

(54) **Mousqueton pour l'escalade et la spéléologie**
Karabinerhaken für Bergbesteigung und Speläologie
Snap hook for mountaineering and speleology

(30) Priorité: 11.01.1993 FR 9300214
(43) Date de publication de la demande: 20.07.1994
(73) Titulaire: ZEDEL, F-38920 Crolles (FR)
(72) Inventeur: Petzl, Paul, F-38530 Barraux (FR)
(74) Mandataire: Hecké, Gérard

(56) Documents cités:
- CH-A- 461 327
- FR-A- 2 461 146
- FR-A- 2 582 223
- US-A- 1 450 264

## Description

L'invention est relative à un mousqueton, notamment pour la pratique de l'escalade et de la spéléologie, comportant :
- un corps en forme de C, et un doigt mobile monté à pivotement sur un axe porté par l'une des extrémités du corps,
- une partie mâle à l'autre extrémité du corps, ayant une section transversale en forme de T renversé, composée d'une languette centrale associée à une protubérance terminale en forme de chape,
- une partie femelle agencée dans le doigt à l'opposé de l'axe, et présentant un premier orifice antérieur d'accès à un évidement interne pour la réception de la protubérance, et une entaille centrale prolongeant le premier orifice vers le sommet du doigt pour la réception de la languette,
- et une butée interne de la partie femelle venant en engagement avec le chant conjugué de la partie mâle en position fermée du doigt.

Un tel mousqueton est décrit dans le document EP-A-289 490, et présente une bonne résistance mécanique à la rupture en supportant des efforts de traction importants. La partie femelle est non débouchante de manière à former une butée de fin de course.
En cas d'utilisation du mousqueton dans un environnement de neige ou de boue, se pose néanmoins le problème d'accumulation de glace ou de saletés dans l'évidement de la partie femelle.
Le colmatage progressif de l'évidement risque d'affecter la tenue mécanique du mousqueton, en fonction de la dégradation de la zone de verrouillage entre les parties mâle et femelle.

L'objet de l'invention consiste à améliorer la sécurité d'un mousqueton quel que soit le milieu environnant.

Le mousqueton selon l'invention est caractérisé en ce que le doigt comprend de plus un deuxième orifice postérieur d'échappement faisant communiquer le volume interne de l'évidement avec le milieu extérieur, du côté opposé au premier orifice, et que le deuxième orifice d'échappement se trouve sensiblement en regard de la protubérance en fin de course de fermeture du doigt pour assurer l'évacuation de la boue vers l'extérieur, et un autonettoyage de la zone de verrouillage à l'intérieur de l'évidement.

Selon une caractéristique de l'invention, la protubérance comporte une première surface d'accrochage constituant ladite zone de verrouillage avec la partie femelle, et une deuxième surface agencée en piston fixe délimitant un volume pistonnable lors du rapprochement progressif du fond de l'évidement vers la protubérance, ledit volume pistonnable étant ouvert du côté du deuxième orifice d'échappement.

Selon une autre caractéristique, la butée interne de la partie femelle, possède une surface convexe coopérant en position fermée avec une surface concave conjuguée du chant de la languette, la réaction de la butée sur le chant formant un angle A aigu avec l'axe YY' de l'évidement.

La forme du deuxième orifice d'échappement est quelconque, et sa dimension peut être identique ou inférieure à celle du premier orifice d'accès.

Les avantages et caractéristiques ressortiront plus clairement de la description qui va suivre d'un mode de réalisation de l'invention, donné à titre d'exemple non limitatif, et représenté aux dessins annexés, dans lesquels :
- la figure 1 est une vue schématique en élévation d'un mousqueton selon l'invention, la zone de verrouillage étant représentée en coupe partielle;
- la figure 2 montre une vue de profil du mousqueton de la figure 1;
- la figure 3 est une vue partielle à l'échelle agrandie de la zone de verrouillage du mousqueton de la figure 1;
- la figure 4 est une vue de profil de droite de la figure 3 représentant la partie femelle du doigt;
- les figures 5 et 6 sont des vues identiques respectives des figures 3 et 4 d'une variante de réalisation;
- la figure 7 est une vue identique à la figure 3 d'une autre variante.

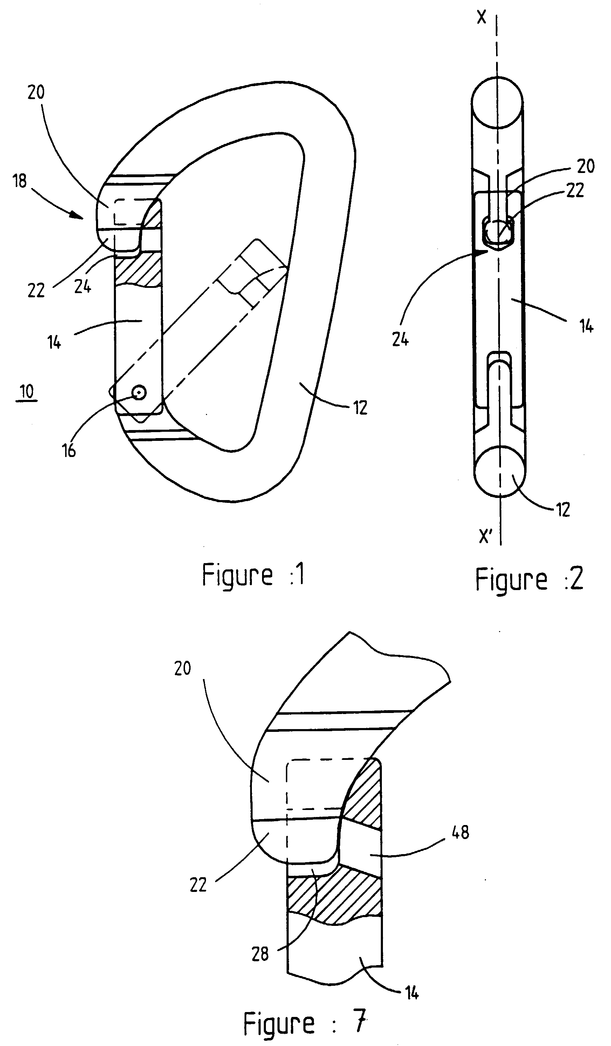

Sur les figures 1 à 4, un mousqueton 10 pour la pratique de l'escalade et de la spéléologie, comporte un corps 12 fixe en forme de C, et un doigt 14 mobile de section cylindrique monté à pivotement sur un axe 16 porté par l'extrémité inférieure du corps 12. Le doigt 14 est déplaçable par une action de poussée vers l'intérieur du corps 12, pour occuper une position écartée (en pointillé sur la figure 1), autorisant l'ouverture du mousqueton 10 pour l'introduction d'une corde ou d'une sangle de sécurité. Un ressort de rappel (non représenté) est agencé à l'intérieur du doigt 14, et sollicite ce dernier en sens inverse vers une position fermée (traits pleins sur figure 1) de manière à venir en engagement avec l'extrémité supérieure du corps 12.

L'extrémité supérieure du corps 12 comporte une partie mâle 18 ayant une section transversale en forme de T renversé s'étendant dans le plan de trace XX' du corps 12. La partie mâle 18 est composée d'une languette 20 centrale qui se termine par une protubérance 22 élargie en forme de chape. La protubérance 22 terminale présente une largeur totale supérieure à celle de la languette 20, mais inférieure au diamètre du profilé constituant le reste du corps 12;
Le doigt 14 est équipé à l'opposé de l'axe 16, d'une partie femelle 24 ayant une forme conjuguée à la partie mâle 18. La partie femelle 24 comporte un premier orifice 26 antérieur d'accès à un évidement 28, interne, lequel est délimité par deux faces 30, 32 latérales et parallèles, réunies entre elles par un fond 34 en forme de voûte.
A l'opposé du fond 34, les faces 30, 32 convergent vers une entaille 36 centrale qui se prolonge dans le plan diamétral vers le sommet 37 du doigt 14.

La largeur L1 de l'entaille 36 est d'une part légèrement supérieure à l'épaisseur de la languette 20 de la partie mâle 18, et d'autre part inférieure à l'écartement L2 entre les deux faces 30, 32 latérales. Il en résulte un jeu périphérique autorisant l'insertion de la partie femelle 24 sur la partie mâle 18 lors de la fermeture du doigt 14.

La profondeur de l'évidement 28 de réception de la protubérance 22 est définie par une butée 38 interne, ayant un profil incurvé de liaison avec l'entaille 36 au niveau du sommet 37 du doigt 14.

La butée 38 présente une surface convexe coopérant avec une forme concave conjuguée du chant interne 40 de la languette 20.

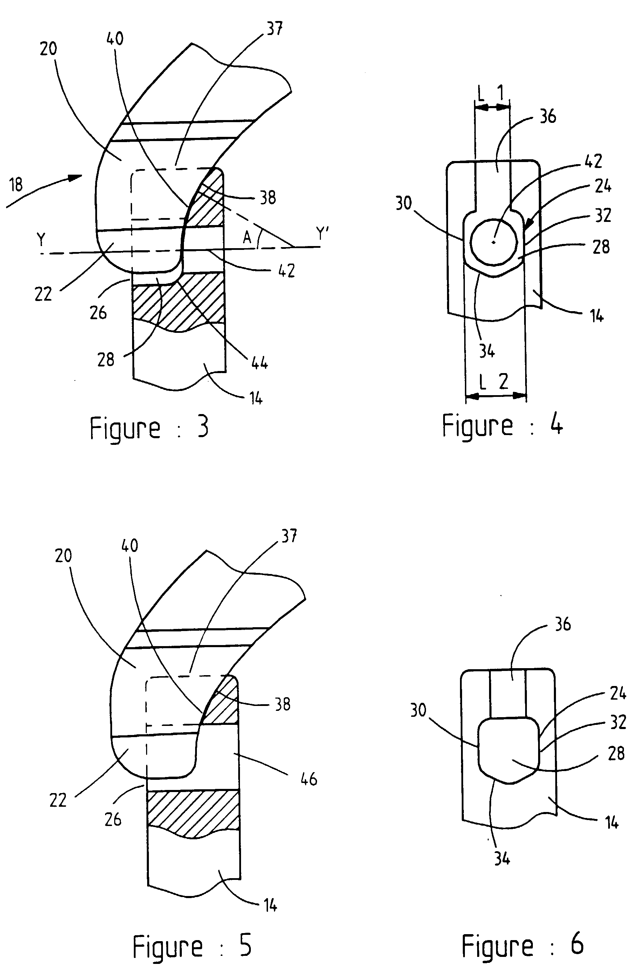

Pour permettre l'évacuation de boue, de neige ou d'autres particules accumulées dans l'évidement 28 de la partie femelle 24, le doigt 14 comprend de plus un deuxième orifice d'échappement 42 postérieur, faisant communiquer l'intérieur de l'évidement 28 avec le milieu extérieur, du côté opposé à l'orifice 26 antérieur, c'est à dire vers l'intérieur du corps 12. Selon les figures 3 et 4, le deuxième orifice d'échappement ou trou 42 possède une dimension légèrement inférieure à celle de l'évidement 28. Un chanfrein 44 intermédiaire assure la liaison interne entre l'évidement 28 et le trou 42, lesquels sont sensiblement alignés selon une direction YY' perpendiculaire au doigt 14.

On remarque que la réaction de la butée 38 sur le chant interne 40 concave de la languette 20 en position fermée du mousqueton 10, forme un angle A aigu avec l'axe YY' de l'évidement 28 et du trou 42. Le rapprochement progressif du fond de l'évidement 28 vers la protubérance 22 de la partie mâle 18 délimite un volume pistonnable ouvert du côté du trou d'échappement 42.
La protubérance 22 constitue un piston fixe, et les particules de boue sont évacuées automatiquement à travers le trou 42 cylindrique vers l'extérieur. Le volume interne de l'évidement 28 reste propre en permanence, permettant la venue en engagement de la butée 38 contre le chant 40 conjugué de la languette 20 dans toutes les conditions d'environnement. La zone interne de verrouillage entre les parties mâle et femelle 18, 24 est optimum, ce qui garantit la sécurité du mousqueton 10.

Selon la variante des figures 5 et 6, le trou d'échappement 46 est disposé dans le prolongement de l'évidement 28, et a la même forme que l'orifice 26 d'accès.

Selon la figure 7, le trou d'échappement 48 est incliné vers le bas par rapport à l'évidement 28.

Dans les trois réalisations, le trou d'échappement 42, 46, 48 se trouve disposé en regard de la protubérance 22 lorsque le doigt 14 arrive en fin de course de fermeture. Une telle disposition permet une évacuation efficace de la boue vers l'extérieur, et un autonettoyage de la zone de verrouillage du mousqueton.

Il est évident de modifier la forme, et l'emplacement du trou d'échappement sans sortir du cadre de l'invention.

Le mousqueton 10 est réalisé en un matériau à base d'aluminium.

## Revendications

1. Mousqueton, notamment pour la pratique de l'escalade et de la spéléologie, comportant :
- un corps (12) en forme de C, et un doigt (14) mobile monté à pivotement sur un axe (16) porté par l'une des extrémités du corps (12),
- une partie mâle (18) à l'autre extrémité du corps (12), ayant une section transversale en forme de T renversé, composée d'une languette (20) centrale associée à une protubérance (22) terminale en forme de chape,
- une partie femelle (24) agencée dans le doigt (14) à l'opposé de l'axe (16), et présentant un premier orifice (26) antérieur d'accès à un évidement (28) interne pour la réception de la protubérance (22), et une entaille (36) centrale prolongeant le premier orifice (26) vers le sommet (37) du doigt pour la réception de la languette (20),
- et une butée (38) interne de la partie femelle (24) venant en engagement avec le chant (40) conjugué de la partie mâle (18) en position fermée du doigt (14), caractérisé en ce que le doigt (14) comprend de plus un deuxième orifice (42, 46, 48) postérieur d'échappement faisant communiquer le volume interne de l'évidement (28) avec le milieu extérieur, du côté opposé au premier orifice (26), et que le deuxième orifice (42, 46, 48) d'échappement se trouve sensiblement en regard de la protubérance (22) en fin de course de fermeture du doigt (14) pour assurer l'évacuation de la boue vers l'extérieur, et un autonettoyage de la zone de verrouillage à l'intérieur de l'évidement (28).

2. Mousqueton selon la revendication 1, caractérisé en ce que la protubérance (22) comporte une première surface d'accrochage constituant ladite zone de verrouillage avec la partie femelle (24), et une deuxième surface agencée en piston fixe délimitant un volume pistonnable lors du rapprochement progressif du fond de l'évidement (28) vers la protubérance (22), ledit volume pistonnable étant ouvert du côté du deuxième orifice (42, 46, 48) d'échappement.

3. Mousqueton selon la revendication 1 ou 2, caractérisé en ce que la butée (38) interne de la partie femelle (24), possède une surface convexe coopérant en position fermée avec une surface concave conjuguée du chant (40) de la languette (20), la réaction de la butée (38) sur le chant (40) formant un angle A aigu avec l'axe YY' de l'évidement (28).

4. Mousqueton selon la revendication 1, 2 ou 3, caractérisé en ce que le deuxième orifice (42, 46) d'échappement est disposé dans l'alignement avec l'évidement (28).

5. Mousqueton selon la revendication 1, 2 ou 3, caractérisé en ce que le deuxième orifice (46) d'échappement est incliné vers le bas par rapport à l'axe de l'évidement (28).

6. Mousqueton selon la revendication 4 ou 5, caractérisé en ce que le deuxième orifice (46) d'échappement a une forme sensiblement identique à celle du premier orifice (26) d'accès.

7. Mousqueton selon la revendication 4 ou 5, caractérisé en ce que le deuxième orifice (42) d'échappement possède une dimension inférieure à celle de l'évidement (28), un chanfrein (44) étant ménagé dans la zone de liaison entre l'évidement (28) et ledit deuxième orifice (46).

8. Mousqueton selon la revendication 7, caractérisé en ce que le deuxième orifice (42) est cylindrique.

## Patentansprüche

1. Karabiner, insbesondere zur Ausübung des Bergsteigens und der Höhlenforschung, mit :
- einem C-förmigen Körper (12), und einem beweglichen Finger (14), der schwenkbar auf einer Achse (16) angebracht ist, die von einem der Enden des Körpers (12) getragen wird,
- einem einzufügenden Teil (18) am anderen Ende des Körpers (12), das einen Quer-Abschnitt in Form eines umgedrehten T aufweist, der von einer zentralen kleinen Zunge (20) gebildet wird, die mit einer kappenförmigen End-Protuberanz (22) verbunden ist,
- einem aufnehmenden Teil (24), das in dem der Achse (16) gegenüberliegenden Finger (14) angeordnet ist, und eine erste vordere Zugangs-Öffnung (26) zu einer inneren Aussparung (28) für die Aufnahme der Protuberanz (22) aufweist, und einen zentralen Einschnitt (36), der die erste Öffnung (26) zur Fingerspitze (37) hin verlängert zur Aufnahme der Zunge (20),
- und einem inneren Anschlag (38) des aufnehmenden Teils (24), der mit der zugeordneten Schmalseite (40) des einzufügenden Teils (18) in geschlossener Stellung des Fingers (14) in Verbindung kommt, dadurch gekennzeichnet, dass der Finger (14) ausserdem eine zweite hintere Austritts-Öffnung (42, 46, 48) aufweist, die den inneren Raum der Aussparung (28) mit der äusseren Umgebung verbindet, auf der der ersten Öffnung (26) entgegengesetzten Seite, und dass die zweite Austritts-Öffnung (42, 46, 48) sich annähernd gegenüber der Protuberanz (22) zum Ende der Schliess-Bewegung des Fingers (14) befindet, um die Evakuierung des Schlamms nach aussen und eine Selbstreinigung des Verriegelungsbereichs im Innern der Aussparung (28) zu gewährleisten.

2. Karabiner gemäss Anspruch 1, dadurch gekennzeichnet, dass die Protuberanz (22) eine erste Aufhäng-Oberfläche aufweist, die mit dem aufnehmenden Teil (24), den genannten Verriegelungsbereich bildet, und eine zweite Oberfläche die als fester Kolben ausgebildet ist, der einen Hub-Raum begrenzt bei der progressiven Annäherung des Bodens der Aussparung (28) an die Protuberanz (22), wobei der genannte Hub-Raum auf der Seite der zweiten Austritts-Öffnung (42, 46, 48) offen ist.

3. Karabiner gemäss Anspruch 1 oder 2, dadurch gekennzeichnet, dass der innere Anschlag (38) des aufnehmenden Teils (24) eine konvexe Oberfläche besitzt, die in geschlossener Stellung mit der zugeordneten konkaven Oberfläche der Schmalseite (40) der Zunge (20) zusammenarbeitet, wobei die Wirkung des Anschlags (38) auf die Schmalseite (40) mit der Achse YY' der Aussparung (28) einen spitzen Winkel A bildet.

4. Karabiner gemäss Anspruch 1, 2 oder 3, dadurch gekennzeichnet, dass die zweite Austritts-Öffnung (42, 46) in der Fluchtlinie der Aussparung (28) angeordnet ist.

5. Karabiner gemäss Anspruch 1, 2 oder 3, dadurch gekennzeichnet, dass die zweite Austritts-Öffnung (46) in Bezug auf die Achse der Aussparung (28) nach unten geneigt ist.

6. Karabiner gemäss Anspruch 4 oder 5, dadurch gekennzeichnet, dass die zweite Austritts-Öffnung (46) eine Form aufweist, die annähernd mit der der ersten Zugangs-Öffnung (26) identisch ist.

7. Karabiner gemäss Anspruch 4 oder 5, dadurch gekennzeichnet, dass die zweite Austritts-Öffnung (42) eine geringere Grösse aufweist als die der Aussparung (28), wobei eine Abschrägung (44) in dem Verbindungsbereich zwischen der Aussparung (28) und der genannten zweiten Öffnung (46) angeordnet ist.

8. Karabiner gemäss Anspruch 7, dadurch gekennzeichnet, dass die zweite Öffnung (42) zylindrisch ist.

## Claims

1. A karabiner, notably for climbing and potholing, comprising :
- a C-shaped body (12), and a movable finger (14) pivotally mounted on a spindle (16) supported by one of the ends of the body (12),
- a male part (18) at the other end of the body (12), having a transverse cross-section in the shape of a reverse T, composed of a central tab (20) associated with a terminal protuberance (22) in the form of a cap,
- a female part (24) arranged in the finger (14) opposite the spindle (16) , and having a first front orifice (26) for access to an internal recess (28) to accommodate the protuberance (22), and a central notch (36) extending the first orifice (26) towards the apex (37) of the finger to accommodate the tab (20),
- and an internal stop (38) of the female part (24) coming into engagement with the conjugate edge (40) of the male part (18) in the closed position of the finger (14), characterized in that the finger (14) comprises in addition a second rear outlet orifice (42, 46, 48) making the internal volume of the recess (28) communicate with the outside environment, on the opposite side from the first orifice (26), and that the second outlet orifice (42, 46, 48) is appreciably facing the protuberance (22) at the end of closing travel of the finger (14) to ensure removal of the mud to the outside, and self-cleaning of the locking zone inside the recess (28).

2. The karabiner according to claim 1, characterized in that the protuberance (22) comprises a first latching surface constituting said locking zone with the female part (24), and a second surface arranged as a fixed piston bounding a compressible volume when the bottom of the recess (28) is moved progressively towards the protuberance (22), said compressible volume being open on the side where the second outlet orifice (42, 46, 48) is situated.

3. The karabiner according to claim 1 or 2, characterized in that the internal stop (38) of the female part (24) has a convex surface cooperating in the closed position with a conjugate concave surface of the edge (40) of the tab (20), the reaction of the stop (38) on the edge (40) forming an acute angle A with the axis YY' of the recess (28).

4. The karabiner according to claim 1, 2 or 3, characterized in that the second outlet orifice (42, 46) is arranged in alignment with the recess (28).

5. The karabiner according to claim 1, 2 or 3, characterized in that the second outlet orifice (46) is inclined downwards with respect to the axis of the recess (28).

6. The karabiner according to claim 4 or 5, characterized in that the second outlet orifice (46) has a shape appreciably the same as that of the first access orifice (26).

7. The karabiner according to claim 4 or 5, characterized in that the second outlet orifice (42) has a size smaller than that of the recess (28), a bevel (44) being arranged in the joining zone between the recess (28) and said second orifice (46).

8. The karabiner according to claim 7, characterized in that the second orifice (42) is cylindrical.
